# EUROPÄISCHE PATENTSCHRIFT

(11) **EP 0 802 470 B1**
(45) Veröffentlichungstag und Bekanntmachung des Hinweises auf die Patenterteilung: **31.05.2000**
(21) Anmeldenummer: 96121019.2
(22) Anmeldetag: 31.12.1996
(51) Int. Cl.: G05D 16/06, F01M 13/02

(54) **Druckregelventil**
Pressure regulating valve
Soupape de régulation de pression

(30) Priorität: 20.04.1996 DE 19615865
(43) Veröffentlichungstag der Anmeldung: 22.10.1997
(73) Patentinhaber: ROBERT BOSCH GMBH, 70442 Stuttgart (DE)
(72) Erfinder: Krimmer, Erwin, 73655 Pluederhausen (DE); Huhnen, Gerald, 71522 Backnang (DE); Selig, Heinz, 71636 Ludwigsburg (DE); Miehle, Tilman, 71394 Kernen (DE)

(56) Entgegenhaltungen:
- DE-A- 4 022 129
- GB-A- 662 741
- US-A- 3 145 697
- US-A- 4 267 855
- US-A- 4 295 457

## Beschreibung

Die Erfindung betrifft ein Druckregelventil, insbesondere zum Einstellen eines Unterdrucks in einem Kurbelgehäuse eines Kraftfahrzeuges, nach dem Oberbegriff des Anspruchs 1.

### Stand der Technik

Druckregelventile der gattungsgemäßen Art sind bekannt. Diese werden beispielsweise dazu eingesetzt, in einem Kurbelgehäuse eines Kraftfahrzeuges einen Unterdruck einzustellen/einzuregeln. Dieser Unterdruck ist notwendig, da während des bestimmungsgemäßen Gebrauchs des Kurbelgehäuses aufgrund der sich innerhalb eines Zylinderblocks bewegenden Kolben eine Leckage zwischen dem Kolbenring und der Zylinderwand einstellt. Diese Leckage führt zu einem Druckaufbau mit einem Kraftstoff-Luftgemisch innerhalb des Kurbelgehäuses, der abgebaut werden muß. Damit dieser sich aufbauende Druck nicht ins Freie entweichen kann, ist es bekannt, das Kurbelgehäuse mit einem Unterdruck, zum Beispiel vom Saugrohr, zu beaufschlagen, mittels dem das in das Kurbelgehäuse eintretende Kraftstoff-Luftgemisch abgesaugt und dem Verbrennungsprozeß der Verbrennungskraftmaschine wieder zugeführt werden kann. Die Druckregelventile besitzen hierzu einen mit Unterdruck beaufschlagbaren Anschluß und einen mit dem Kurbelgehäuse als Druckraum verbindbaren Anschluß, wobei ein mittels einer Regelmembran betätigbarer Schließkörper den mit Unterdruck beaufschlagbaren Anschluß und den mit dem Druckraum verbindbaren Anschluß trennt beziehungsweise verbindet. Die Regelmembran ist so ausgelegt, daß diese aufgrund eines sich in dem Kurbelgehäuse aufbauenden Druckes öffnet und hiermit einen mit dem Schließkörper zusammenwirkenden Ventilsitz öffnet, so daß der Unterdruck das Kurbelgehäuse evakuieren kann. Nach Evakuierung des Kurbelgehäuses wird der Schließkörper durch den Unterdruck wieder zum Schließen des Ventilsitzes gezwungen. Der Schließkörper wird hierbei gegen die Kraft eines elastischen Elementes bewegt. Damit bei einem relativ hohen anliegenden Unterdruck (saugrohrseitig) an dem Druckregelventil der Unterdruck in dem Kurbelgehäuse begrenzt werden kann, zum Beispiel obere Grenze 0 mbar relativ, muß das elastische Federelement eine derartige große Federkraft besitzen, daß auch bei geringem Unterdruck im Kurbelgehäuse und hohem anliegenden Unterdruck von der Unterdruckquelle ein sicheres Öffnen des Ventilsitzes gewährleistet ist. Diese relativ große Federkraft behindert jedoch wiederum den Schließvorgang des Druckregelventils, da die Federkraft von dem sich einstellenden Unterdruck im Kurbelgehäuse beziehungsweise im Ventil überwunden werden muß. Hierbei ist unter anderem nachteilig, daß es aufgrund des relativ großen notwendigen Federelementes bei bekannten Druckregelventilen zu einer relativ großen Querschnittsverringerung des Strömungsweges zwischen dem Druckraum und dem mit dem Unterdruck beaufschlagbaren Anschluß innerhalb des Druckregelventils kommt. Das Federelement bildet praktisch eine Barriere für das strömende Medium, so daß sich der Wirkungsgrad des gesamten Druckregelventils verschlechtert. Darüber hinaus ist ein hoher Grad an Verschmutzung des Federelementes gegeben, da dieses direkt dem aus dem Druckraum, beispielsweise dem Kurbelgehäuse eines Zylinderblocks eines Kraftfahrzeuges abgesaugten Medium, das beispielsweise Kraftstoffpartikel und andere Verschmutzungen enthalten kann (Blow-By-Kondensat), ausgesetzt ist. Mit zunehmender Gebrauchsdauer kann es durch eine Ansammlung von Verschmutzungen zu Beeinträchtigungen der Federkraft des Federelementes kommen, was wiederum auf das Schließverhalten des Druckregelventils Einfluß hätte.

Aus der US-A- 3 145 697 ist ein Druckregelventil zum Einstellen eines Unterdrucks in einem Kurbelgehäuse eines Fahrzeugs mit einem mit Unterdruck beaufschlagbaren Anschluß und einem mit einem Druckraum verbindbaren Anschluß und einem mittels einer Regelmembran betätigbaren Schließkörper, der ein Ventilsitz gegen die Kraft eines sich am Schließkörper abstützenden elastischen Federelements verschließt, bekannt. Das elastische Federelement ist außerhalb eines Strömungsweges zwischen dem mit Unterdruck beaufschlagbaren Anschluß und dem mit dem Druckraum verbindbaren Anschluß angeordnet. Das Gegenlager wird ferner von einem mit einem Gehäuseteil verankerten Federauflager gebildet und ist oberhalb des mit Unterdruck beaufschlagbaren Anschlusses gehalten. Bei dieser Anordnung des Federelements außerhalb des Strömungsweges erfolgt die Übertragung des Unterdrucks auf die Regelmembran durch in den Schließkörper integrierte Öffnungen. Die Öffnungen im Schließkörper bilden auch hier ein relativ große Querschnittsverringerung des Strömungsweges zum Aufbau eines Unterdrucks an der Regelmembran.

Aus der GB-A- 662 741 ist ferner ein Druckregler mit einer Membran und einer Feder bekannt, bei dem aus bautechnischen Gründen die Feder und das dazugehörige Federauflager koaxial innerhalb eines Schließkörpers angeordnet ist. Dabei weist das Federauflager ein Halteelement mit einem von der Feder umgriffen Dorn auf.

### Vorteile der Erfindung

Das erfindungsgemäße Druckregelventil mit den im Anspruch 1 genannten Merkmalen bietet den Vorteil, daß ein Anströmen des Federelements von dem strömenden Medium ausgeschlossen und gleichzeitig eine direkte Übertragung des Unterdrucks auf die Regelmembran möglich ist. Durch die gefundene Anordnung wird vermieden, daß der Strömungsweg eine Querschnittsverengung erfährt. Insgesamt läßt sich somit die Funktion des Druckregelventils genauer einstellen, da sich auf den Stellweg der Membran auswirkende Verwirbelungen des strömenden Mediums ausschließen lassen. Es ist letztendlich möglich, relativ kleine konstante Unterdrücke in dem Druckraum einzuregeln.

Aufgrund der nicht eintretenden Verschmutzung des Federelementes wird außerdem eine Beeinflussung der Federkennlinie während der gesamten Einsatzdauer des Druckregelventils erheblich minimiert.

Weitere vorteilhafte Ausgesstaltungen der Erfindung ergeben sich aus den in den Unteransprüchen genannten Merkmalen.

### Zeichnung

Die Erfindung wird nachfolgend in einem Ausführungsbeispiel anhand der zugehörigen Zeichnung, die eine Schnittdarstellung durch ein Druckregelventil zeigt, näher erläutert.

### Beschreibung des Ausführungsbeispiels

In der Figur ist eine Schnittdarstellung durch ein allgemein mit 10 bezeichnetes Druckregelventil gezeigt. Das Druckregelventil besitzt ein erstes Gehäuseteil 12 und ein zweites Gehäuseteil 14. Die Gehäuseteile 12 und 14 sind in noch zu erläuternder Weise als Unter- beziehungsweise Oberteil des Druckregelventils 10 ausgebildet. Das Gehäuseteil 12 besitzt eine rohrförmige Verlängerung 16, die einen Anschluß 18 für einen Druckraum, beispielsweise ein Kurbelgehäuse einer nicht dargestellten Verbrennungskraftmaschine bildet. Die Verlängerung 16 besitzt auf ihrem Außenumfang 20 eine Riffelung 22, die zum Befestigen einer flexiblen Verbindung, beispielsweise eines Schlauches, geeignet ist. Das Gehäuseteil 12 besitzt weiterhin eine Öffnung 24, die von einem ringförmigen Kragen 26 umgriffen wird. Der Kragen 26 besitzt an seinem Außenumfang eine umlaufende Nut 28, in die ein Dichtungsring 30 einlegbar ist, der eine radiale Dichtung ausbildet. Der Kragen 26 bildet einen Anschluß 32 für eine zu einer nicht dargestellten Unterdruckquelle, beispielsweise einem Saugrohr eines Kraftfahrzeuges führende Verbindung.

Nach einem weiteren, nicht dargestellten Ausführungsbeispiel ist die axiale Erstreckung des Kragens 26 geringer gewählt. In diesem Fall wird der Kragen 26 von einem koaxialen Dichtungsring umgriffen, der eine axiale Dichtung ausbildet.

Das Gehäuseteil 14 ist im wesentlichen kreisförmig ausgebildet und besitzt an seinem äußeren, dem Gehäuseteil 12 zugewandtem Rand 34 eine umlaufende Ringnut 36. Die Nut 36 wird hierbei von einem kürzeren Schenkel 38 und einem längeren Schenkel 40 des Randes 34 gebildet. Die Gehäuseteile 12 und 14 sind beispielsweise in hier nicht näher zu erläuternder Weise miteinander durch eine Rastverbindung 42 verbindbar. Das Gehäuseteil 14 weist einen koaxial zu einer Axialen 44 verlaufenden, hülsenförmigen Abschnitt 46 auf, der mittels einer Abdeckkappe 48 verschließbar ist. Die Abdeckkappe 48 besitzt wenigstens eine Rastnase 50, die in eine entsprechende Ausnehmung 52 der Hülse 46 einrastbar ist. Die Hülse 46 besitzt einen ringförmigen Kragen 54, der eine umlaufende Nut 56 ausbildet. Das Gehäuseteil 14 besitzt ferner wenigstens eine Durchgangsöffnung 58, die einen Innenraum 60 mit der das Druckregelventil 10 umgebenden Atmosphäre, also mit Normaldruck, verbindet.

In dem Innenraum 60 des Druckregelventils 10 befindet sich ein Ventilkörper 62. Der Ventilkörper 62 besitzt einen hülsenförmigen Abschnitt 64, der in einen Endabschnitt 66 übergeht. Der Endabschnitt 66 besitzt eine kegelstumpfförmige Mantelfläche 68, die von einer umlaufenden Nut 70 eingeschnürt wird. Der Endabschnitt 66 besitzt ferner eine axiale Durchgangsöffnung 72, die in einem Innenraum 74 des hülsenförmigen Abschnitts 64 mündet. Andererseits mündet die Durchgangsöffnung 72 in einem Innenraum 76 des Gehäuseteils 14, der durch die Abdeckkappe 48 verschließbar ist. Der Ventilkörper 62 wird mittels einer Regelmembran 78 gehalten. Die Regelmembran 78 besitzt eine Profilierung, die einerseits in eine umlaufende Nut 80 des Ventilkörpers 62 eingreift und sich entlang des hülsenförmigen Abschnitts 64 erstreckt. Die Regelmembran 78 ist durch einen Membranteller 82 verstärkt beziehungsweise stabilisiert, der von einer Hülse 84 gebildet wird, die den hülsenförmigen Abschnitt 64 des Ventilkörpers 62 umgreift. Ein zwischen der Hülse 84 und dem hülsenförmigen Abschnitt 64 des Ventilkörpers 62 sich befindender Zwischenraum 86, der beispielsweise von auf einer Kreislinie angeordneten Durchgangsbohrungen durch die Hülse 84 gebildet werden kann, wird von einem axial verlaufenden Abschnitt 88 der Regelmembran 78 ausgefüllt. Der Abschnitt 88 der Regelmembran 78 ist über den Ventilkörper 62 hinaus verlängert und bildet dort einen Wulst 90 aus, der sich im geschlossenen Zustand des Druckregelventils 10 (gestrichelt dargestellt) an einer Innenfläche 92 des Gehäuseteils 12 abstützt. Andererseits ist die Regelmembran 78 zwischen den Gehäuseteilen 12 und 14 eingeklemmt, indem die Regelmembran einen umlaufenden Abschnitt 94 aufweist, der in der Nut 36 des Gehäuseteils 14 zu liegen kommt und durch den Schenkel 38 arretiert ist. Der Ventilkörper 62 ist somit mittels der Regelmembran 78 in dem Innenraum 60 des Druckregelventils 10 frei aufgehängt. Die Aufhängung des Ventilkörpers 62 ist im Ruhezustand des Druckregelventils so ausgelegt, daß der Wulst 90 die Innenfläche 92 nicht berührt, so daß eine direkte Verbindung als Strömungsweg 95 zwischen dem Anschluß 32 und dem Anschluß 18 besteht. Der Wulst 90 und die Innenfläche 92 bilden hierbei einen noch zu erläuternden Ventilsitz 96 aus.

An einem Grund 98 des Innenraums 74 des hülsenförmigen Abschnitts 64 stützt sich ein elastisches Federelement 100 ab, das an einem Gegenlager 102 gegengelagert ist. Das Gegenlager 102 wird von einem Kragarm 104 gebildet. Der Kragarm 104 erstreckt sich von dem Kragen 26 des Gehäuseteils 12 in Richtung des Innenraums 74 des hülsenförmigen Abschnitts 64 des Ventilkörpers 62. Der Kragarm 104 bildet hierbei ein Federauflager 105 aus, das sich innerhalb des von dem koaxial verlaufenden Abschnitt 88 der Regelmembran 78 umschriebenen Raumes befindet. Auch bei maximal geöffneter Stellung der Regelmembran 78 befindet sich das Federauflager 105 außerhalb des gekennzeichneten Strömungsweges 95. Auf dem Federlager 105 stützt sich das Federelement 100 ab. Zur Justierung und Sicherung des Federelementes 100 ist ein dornförmiger Fortsatz 107 vorgesehen, der von dem beispielsweise als Spiralfeder ausgebildeten Federelement 100 umgriffen wird.

Der Kragarm 104 ist an einer der Öffnung 18 abgewandten Seite des Kragens 26 angeordnet, so daß sich für das entlang des Strömungsweges 95 strömende Medium eine unter einem Winkel zu der Axialen 44 verlaufende Anströmfläche 109 ergibt. Der Kragarm 104 ist im Querschnitt gesehen schmal ausgebildet, so daß sich eine entsprechend kleine Anströmfläche 109 und eine entsprechend kleine Querschnittsverengung des Anschlusses 32 ergibt.

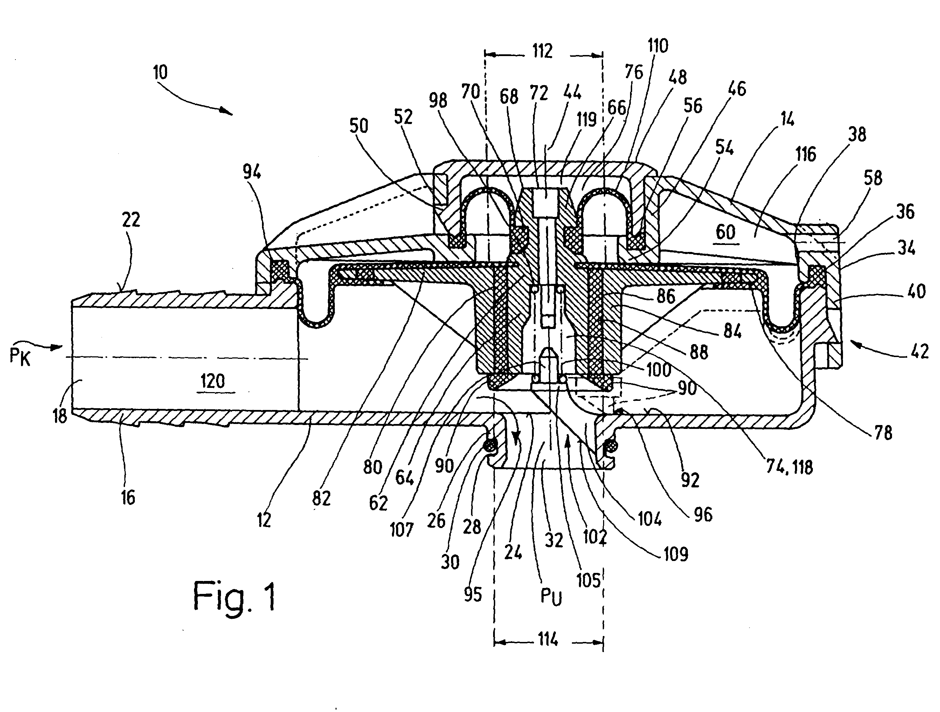

In unbelastetem, in der Figur 1 gezeigten Zustand des elastischen Federelementes 100 befindet sich der Ventilkörper 62 in einer solchen Position, daß der Ventilsitz 96 geöffnet ist. Das elastische Federelement 100 unterstützt somit die Tragwirkung der Regelmembran 78 für das Ventilelement 62.

An den Ventilkörper 62 greift eine Hilfsmembran 110 an, die sich einerseits in der Nut 70 abstützt und andererseits mittels der Abdeckkappe 48 in der Nut 56 des Gehäuseteils 14 festgeklemmt ist. Eine Wirkfläche 112 der Hilfsmembran 110 entspricht einer Fläche 114 des Ventilkörpers 62, die dem Anschluß 32 zugewandt ist.

Durch die Anordnung des Ventilkörpers 62 wird der Innenraum 60 des Druckregelventils 10 in verschiedene Bereiche aufgeteilt, von denen ein erster Bereich 116 mit Normaldruck über die Durchgangsöffnung 58 beaufschlagt ist. Dieser Normaldruck liegt somit - gemäß der in Figur 1 gezeigten Darstellung - an der Oberseite der Regelmembran 78 und der Unterseite der Hilfsmembran 110 an. In einem zweiten Bereich 118 beziehungsweise 119, der von dem Innenraum 74 (118) des Ventilkörpers 62 und dem Innenraum 76 (119) gebildet wird, die über die Durchgangsöffnung 72 miteinander in Verbindung stehen, liegt bei geschlossenem Ventilsitz 96 der an dem Anschluß 32 anliegende Unterdruck an. Ein dritter Bereich 120 weist das an dem Anschluß 18 anliegende Druckniveau auf, das gleichzeitig an der Unterseite der Regelmembran 78 anliegt.

Das in Figur 1 gezeigte Druckregelventil 10 übt folgende Funktion aus:

Beim Betrieb eines mit dem Druckregelventil 10 ausgestatteten Kraftfahrzeuges ist der Anschluß 18 mit dem Kurbelgehäuse der Verbrennungskraftmaschine verbunden. Der Anschluß 32 ist gleichzeitig mit einer Unterdruckquelle, das heißt, bei einem Kraftfahrzeug beispielsweise mit einem Saugrohr, verbunden. Die Unterdruckquelle stellt einen Unterdruck P_{U} zur Verfügung, der zwischen Werten von ca. Atmosphärendruck bis -900 mbar schwanken kann. Da sich das Druckregelventil in seiner Ausgangsstellung befindet, das heißt, der Ventilsitz 96 ist durch die Kraft des Federelementes 100 beziehungsweise dessen elastischer Aufhängung in der Regelmembran 78 leicht geöffnet, wird mittels der Unterdruckquelle der in dem Bereich 114 herrschende Unterdruck P_{U} über den geöffneten Ventilsitz 96 auf den Bereich 120 übertragen. Dieser Unterdruck P_{U} wirkt somit auf das an den Anschluß 18 angeschlossene Kurbelgehäuse, so daß dieses evakuiert wird und sich dort ein bestimmter Unterdruck P_{K} (Kurbelgehäusedruck) einstellt. Der Unterdruck P_{K} in dem Kurbelgehäuse soll auf einen möglichst konstanten, geringfügigen Unterdruck von zum Beispiel -10 bis -15 mbar eingeregelt werden. Der Unterdruck P_{U} liegt gleichzeitig an dem Ventilkörper 62 und zwar an dessen dem Anschluß 32 zugewandten Fläche 114 an. Hierdurch wird der Ventilkörper 62 gegen die Kraft des Federelementes 100 in Richtung des Anschlusses 32 gezogen. Andererseits wirkt an dem Ventilkörper 62 über die Regelmembran 78 der an dessen Unterseite in dem Bereich 120 anliegende Druck P_{K}. Soll nunmehr der Ventilkörper 62 in Richtung des Anschlusses 32 bewegt werden, so daß der von dem Wulst 90 und der Innenfläche 92 gebildete Ventilsitz 96 schließt, so muß die von dem Unterdruck P_{U} ausgehende Kraft größer sein als die Summe der von dem Federelement 100 und dem Druck P_{K} auf den Ventilkörper 62 wirkenden Kräfte. Somit wird klar, daß zum Schließen des Ventilsitzes an sich die von dem Unterdruck P_{U} ausgehende Kraft auf den Ventilkörper 62 größer sein muß als die Kraft des Federelementes 100, der Kraft aufgrund der Steifigkeit der Membran (besonders bei tiefen Temperaturen) plus, beziehungsweise bei einem Unterdruck P_{K} minus, die von dem Druck P_{K} ausgehende Kraft.

Während der beschriebenen Evakuierung des Kurbelgehäuses wird ein Volumenstrom von dem Anschluß 16 entlang des Strömungsweges 95 zu dem Anschluß 32 aufgrund der herrschenden Druckverhältnisse erzeugt. Dieser Volumenstrom enthält naturgemäß aufgrund der Leckage in das Kurbelgehäuse Verschmutzungspartikel, beispielsweise von Kraftstoffen, Ölen, Abrieb usw. Diese Verschmutzungspartikel werden bei der Evakuierung, ohne daß diese an das Federelement 100 gelangen können, unmittelbar durch den geöffneten Ventilsitz 96 in den Anschlußstutzen 32 gesaugt. Durch die gefundene Anordnung des Kragarmes 104 ergibt sich für den Volumenstrom entlang des Strömungsweges 95 eine nur äußerst geringe Querschnittsverengung. Somit können im wesentlichen konstante Strömungsverhältnisse aufrechterhalten werden. Ein an dem Kragarm 104 gelangender Volumenstrom wird durch die dortige Ausbildung der Anströmfläche 109 direkt in den Anschluß 32 umgelenkt, so daß es zu keinen, die Funktion des Druckregelventils 10 beeinträchtigenden Verwirbelungen kommen kann. Unabhängig von der Stellung der Regelmembran 78 ist das Federelement 100 jederzeit vor dem Volumenstrom beziehungsweise den darin enthaltenen Partikeln geschützt angeordnet. Eine Verschmutzung und damit Beeinträchtigung der Federwirkung des Federelementes 100 ist somit ausgeschlossen.

Durch den in der Figur gezeigten Aufbau des Druckregelventils 10 ergibt sich, daß der an dem Anschluß 32 anliegende Unterdruck P_{U} über die Durchgangsöffnung 72 des Ventilkörpers 62 gleichzeitig in dem von dem Innenraum 76 gebildeten Bereich 119 anliegt. Der Unterdruck P_{U} wirkt hier auf die Oberseite der Hilfsmembran 110. Da die Hilfsmembran 110 mit dem Ventilkörper 62 in dessen Nut 70 fest verankert ist, wird eine aufgrund des Unterdruckes P_{U} an der Oberseite der Hilfsmembran 110 erzeugte Kraft auf den Ventilkörper 62 übertragen. Die von dem Unterdruck P_{U} ausgehende Kraft liegt somit an den sich gegenüberliegenden Seiten des Ventilkörpers 62 an, so daß durch eine Wahl der Größe der sich gegenüberliegenden Flächen, die mit dem Unterdruck P_{U} beaufschlagbar sind und eine Kraft auf den Ventilkörper 62 ausüben, eine resultierende Kraft eingestellt wird, die auf den Ventilkörper 62 wirkt. Ist nunmehr die Wirkfläche 112 der Hilfsmembran 110 gleich groß wie die Fläche 114, befindet sich der Ventilkörper 62, bezogen auf die von dem Unterdruck P_{U} ausgehende Kraft in einem Kräftegleichgewicht, das heißt, die resultierende Kraft hat einen Wert von Null. Durch die Durchgangsöffnung 72, die die Bereiche 119 und 118 miteinander verbindet, wird eine Druckwaage für den Ventilkörper 62 geschaffen. Der Ventilkörper 62 kann somit eine Position innerhalb des Druckregelventils 10 einnehmen, die unabhängig von einem an dem Anschluß 32 anliegenden Unterdruck P_{U} und damit unabhängig von einer von dem Unterdruck P_{U} ausgehenden, auf den Ventilkörper 62 wirkenden Kraft ist. Durch eine Variation der Größenverhältnisse der Wirkfläche 112 zu der Fläche 114 kann die resultierende Kraft F in den positiven beziehungsweise negativen Bereich verschoben werden, das heißt, der Ventilkörper 62 wird aufgrund des Unterdruckes P_{U} - gemäß der in der Figur gezeigten Darstellung - entweder nach unten oder nach oben gezogen. Zur Wahrung der Unabhängigkeit von dem Unterdruck P_{U} besitzt die resultierende Kraft idealerweise jedoch den Wert Null.

Aufgrund dieser Zusammenhänge wird die den Ventilsitz 96 öffnende beziehungsweise schließende Kraft ausschließlich von- einer Kraft des Federelementes 100 und einer von dem Druck P_{K} in dem Bereich 120 ausgehenden Kraft bestimmt. Somit ist es möglich, die von dem Federelement 100 ausgehende Kraft so einzustellen, daß ein in dem Bereich 120 wirkender Druck P_{K} von beispielsweise -15 mbar ausreicht, der an der Unterseite der Regelmembran 78 anliegt, den Ventilkörper 62 entgegen der Kraft des Federelementes 100 zu bewegen, so daß der Ventilsitz 96 schließt. Schon ein geringfügiges Ansteigen des Druckes P_{K} in dem Bereich 120 über den eingestellten Wert führt dazu, daß sich die von dem leicht erhöhten Druck P_{K} ausgehende Kraft mit der Kraft des Federelementes 100 addiert, so daß der Ventilkörper 62 angehoben wird und damit der Ventilsitz 96 öffnet. Über den offenen Ventilsitz 96 liegt somit der an dem Anschluß 32 anliegende Unterdruck P_{U} ebenfalls in dem Bereich 120 an, so daß das an dem Anschluß 18 anliegende Kurbelgehäuse entlang des Strömungsweges 95 evakuiert werden kann. Sinkt durch diese Evakuierung der in dem Bereich 120 anliegende Druck P_{K} auf den voreingestellten Wert von beispielsweise -15 mbar ab, reicht dies aus, um die Kraft des Federelementes 100 zu überwinden, so daß der Ventilkörper 62 in Richtung des Anschlusses 32 bewegt wird und damit der Ventilsitz 96 wieder schließt.

Dadurch, daß das Federelement 100 keinen großen Kraftbeitrag zum Öffnen des Ventilsitzes 96 (bei hohem P_{U}(-900 mbar)) mehr leisten muß, kann dieses entsprechend schwach dimensioniert werden. Hierdurch ergibt der Vorteil, daß der Ventilsitz 96 schnell schließt, da ein geringfügiger Druckabfall in dem Bereich 120 ausreicht, die Kraft des Federelementes 100 zu überwinden, so daß der Ventilkörper 62 den Ventilsitz 96 schließt. Die Schwankungen des Druckes P_{K} in dem Bereich 120 und damit in dem an dem Anschluß 18 angeschlossenen Kurbelgehäuse, können damit in einem eng begrenzten Bereich eingestellt werden.

## Patentansprüche

1. Druckregelventil, insbesondere zum Einstellen eines Unterdrucks in einem Kurbelgehäuse eines Kraftfahrzeuges, mit einem mit Unterdruck beaufschlagbaren Anschluß (32) und einem mit einem Druckraum verbindbaren Anschluß (18) und einem mittels einer Regelmembran (78) betätigbaren Schließkörper (62), der einen Ventilsitz gegen die Kraft eines sich am Schließkörper abstützenden, elastischen Federelementes (100) verschließt, welches außerhalb eines Strömungsweges (95) zwischen dem mit Unterdruck beaufschlagbaren Anschluß (32) und dem mit dem Druckraum verbindbaren Anschluß (18) und an eine dem Anschluß (32) zugeordneten Seite des Schließkörpers (62) angeordnet ist und sich an einem Gegenlager (102) abstützt, wobei das Gegenlager (102) außerhalb des Strömungsweges (95) angeordnet und von einem mit einem Gehäuseteil (12) verankerten Federauflager (105) gebildet ist und wobei das Federauflager (105) an wenigstens einem Kragarm (104) oberhalb des Anschlusses (32) gehalten wird, **dadurch gekennzeichnet**, daß sich der Kragarm (104) von einer dem Anschluß (18) abgewandten Seite eines den Anschluß (32) bildenden Kragens (26) des Gehäuseteils (12) erstreckt und daß der Kragarm (104) eine unter einem Winkel zu einer Axialen (44) des Schließkörpers (62) verlaufende Anströmfläche (109) für ein zu evakuierendes Medium bildet.

2. Druckregelventil nach Anspruch 1, dadurch gekennzeichnet, daß das Federauflager (105) innerhalb eines von einem koaxial verlaufenden Abschnitt (88) der Regelmembran (78) umschriebenen Raumes (74,118) angeordnet ist.

3. Druckregelventil nach Anspruch 1, dadurch gekennzeichnet, daß das Federauflager (105) ein Halteelement für das Federelement (100) aufweist.

4. Druckregelventil nach Anspruch 3, dadurch gekennzeichnet, daß ein von dem Federelement (100) umgriffener Dorn (107) auf dem Federauflager (105) angeordnet ist.

## Claims

1. Pressure-regulating valve, in particular for setting a vacuum in a crankcase of a motor vehicle, with a port (32) which can be subjected to a vacuum, a port (18) which can be connected to a pressure space, and a closing body (62) which can be actuated by means of a regulating diaphragm (78) and closes a valve seat counter to the force of an elastic spring element (100) which is supported against the closing body, is arranged outside a flow path (95) between the port (32) which can be subjected to a vacuum and the port (18) which can be connected to the pressure space, on a side of the closing body (62) associated with the port (32), and is supported against an abutment (102), the abutment (102) being arranged outside the flow path (95) and being formed by a spring support (105) anchored to a housing part (12), and the spring support (105) being held on at least one counter lever arm (104), above the port (32), characterized in that the counter lever arm (104) extends from one side of a collar (26) - forming the port (32) - of the housing part (12), the side remote from the port (18), and in that the counter lever arm (104) forms an incident-flow surface (109), extending at an angle to an axis (44) of the closing body (62), for a medium to be evacuated.

2. Pressure-regulating valve according to Claim 1, characterized in that the spring support (105) is arranged within a space (74, 118) circumscribed by a coaxially extending portion (88) of the regulating diaphragm (78).

3. Pressure-regulating valve according to Claim 1, characterized in that the spring support (105) has a holding element for the spring element (100).

4. Pressure-regulating valve according to Claim 3, characterized in that a peg (107) surrounded by the spring element (100) is arranged on the spring support (105).

## Revendications

1. Soupape de régulation de pression notamment pour régler une dépression dans le carter de vilebrequin d'un moteur à combustion interne comprenant
un branchement (32) recevant la dépression et un branchement (18) relié à une chambre de pression,
un organe d'obturation 62 actionné par une membrane de réglage (78) qui ferme un siège de soupape contre la force d'un élément de ressort (100), élastique, en appui contre l'organe d'obturation, dans lequel
cet élément de ressort, à l'extérieur du chemin d'écoulement (95) qui va du branchement (32) mis en dépression au branchement (18) relié à la chambre de pression, est monté du côté de l'organe d'obturation (62) tourné vers le branchement (32) et s'appuie sur un contre-appui (102),
le contre-appui (102) forme un appui de ressort (105) accroché dans une partie de boîtier (12), à l'extérieur du chemin de circulation (95),
et l'appui de ressort (105) est tenu sur au moins un bras en porte-à-faux (104) au-dessus du branchement (32),
caractérisée en ce que
- le bras en porte-à-faux (104) s'étend à partir d'un côté opposé au branchement (18) et appartenant à une collerette (26) de la partie de boîtier (12) formant le branchement (32), et
- le bras (104) forme une surface exposée (109) au fluide à évacuer, telle que cette surface fait un angle par rapport à la direction axiale (44) de l'organe d'obturation (62).

2. Soupape de régulation de pression selon la revendication 1,
caractérisée en ce que
l'appui de ressort (105) se trouve à l'intérieur d'un volume (74, 118) entouré par le segment coaxial (88) de la membrane de réglage (78).

3. Soupape de régulation de pression selon la revendication 1,
caractérisée en ce que
l'appui de ressort (105) comporte un élément de support pour l'élément de ressort (100).

4. Soupape de régulation de pression selon la revendication 3,
caractérisée par
une broche (107) entourée par l'élément de ressort (100), cette broche étant prévue sur l'appui de ressort (105).
